# EUROPÄISCHE PATENTSCHRIFT

(11) **EP 0 402 601 B1**
(45) Veröffentlichungstag und Bekanntmachung des Hinweises auf die Patenterteilung: **28.06.1995**
(21) Anmeldenummer: 90108234.7
(22) Anmeldetag: 30.04.1990
(51) Int. Cl.: G02B 26/10, H04N 3/09, G02B 23/12, G02B 27/02

(54) **Opto-elektronische Ausblickbaugruppe**
Optoelectronic viewing assembly
Ensemble de visualisation opto-électronique

(30) Priorität: 13.06.1989 DE 3919265
(43) Veröffentlichungstag der Anmeldung: 19.12.1990
(73) Patentinhaber: STN ATLAS Elektronik GmbH, D-28305 Bremen (DE); Firma Carl Zeiss, D-73446 Oberkochen (DE)
(72) Erfinder: Ennenga, Luitjen, Ing.-grad., D-2872 Hude (DE); Weiland, Walter, Dip.-Ing. (TH), D-2800 Bremen 41 (DE); Stana, Hans, Dip.-Ing. (FH), D-7082 Oberkochen (DE); Schulz, Norbert, Dipl.-Ing. (FH), D-2807 Achim-Uphusen (DE); Teuchert, W. D., Dr. Dipl.-Phys., D-7923 Königsbronn (DE)

(56) Entgegenhaltungen:
- EP-A- 0 217 692
- WO-A-86/03916
- DE-A- 3 731 844
- US-A- 3 626 091

## Beschreibung

Die Erfindung betrifft eine opto-elektronische Ausblickbaugruppe zur Abbildung eines Sehfeldes auf einem Monitor, insbesondere für militärische Kampffahrzeuge, der im Oberbegriff des Anspruchs 1 definierten Gattung.

Bei einer bekannten opto-elektronischen Ausblickbaugruppe dieser Art (US-PS 3 626 091 = DE 20 55 424 A1) ist das Spiegelsystem als N-seitiger, prismatischer Spiegel ausgebildet, der um eine vertikale Achse kontinuierlich dreht. Die aufeinanderfolgenden Flächen des prismatischen Spiegels sind unter kleinen und verschiedenen Winkeln zur Drehachse des Spiegels ausgerichtet. Beim Drehen des prismatischen Spiegels wird die Strahleinfallsrichtung zum Teleskop in Horizontal- und Vertikalrichtung geschwenkt und dadurch das Blickfeld von dem Teleskop zweidimensional abgetastet. Die vom Teleskop nacheinander erzeugten optischen Teilbilder des Blickfeldes werden dann von der Bildabtastvorrichtung (elektrooptischer Wandler) abgetastet und von der elektronischen Auswerteeinheit zu einem auf dem Monitor (Darstellungsgerät mit Kathodenstrahlröhre) vollständigen Blickfeld zusammengesetzt.

Als Bildabtastvorrichtungen werden bei solchen Ausblickbaugruppen bevorzugt Wärmebildgeräte oder CCD-Kameras verwendet. Diese haben eine vorgegebene Strahlungsempfangs- oder Detektorfläche, auf die das Format des vom Teleskop erzeugten Bildes eines Sehfeldes abgestimmt werden muß. Die Anzahl der die Detektorfläche bildenden Detektorelemente bestimmt die Güte der Bildauflösung. Durch dieses Bildformat ist aufgrund der Brennweite des Teleskops dessen Feldwinkel vorgegeben. Bei Ausblickbaugruppen für militärische Fahrzeuge werden hohe Reichweiten bei genügend großer Detailerkennung gefordert. Damit benötigen die hier eingesetzten Teleskope große Brennweiten, was notwendigerweise zu einer starken Verkleinerung des Feldwinkels und damit des Sehfeldes führt. Das mit dem Teleskop erfaßbare Sehfeld ist dann wegen seiner Kleinheit in Relation zu dem interessierenden Gesamtszenario für Überwachungsaufgaben nicht mehr geeignet, insbesondere nicht zur Überwachung schnell fliegender Objekte, die ein solch kleines Sehfeld bereits verlassen haben, bevor sie detektiert werden können.

Der Erfindung liegt die Aufgabe zugrunde, eine optoelektronische Ausblickbaugruppe für sehr große Reichweiten zu schaffen, die bei genügend großer Bildauflösung ein für die Sichtüberwachung ausreichend großes Sehfeld liefert.

Die Aufgabe ist bei einer Ausblickbaugruppe der im Oberbegriff des Anspruchs 1 angegebenen Gattung erfindungsgemäß durch die Merkmale im Kennzeichenteil des Anspruchs 1 gelöst.

Bei der erfindungsgemäßen optronischen Ausblickbaugruppe wird innerhalb kürzester Zeit das Sehfeld für ein überwachtes Gebiet aus einer Mehrzahl von Einzelbereichen oder Segmenten zusammengesetzt, deren Abmessungen aufgrund der geforderten Reichweiten und Detailauflösung vom Teleskop vorgegeben sind. Das dem Teleskop in Lichteinfallsrichtung vorgesetzte Spiegelsystem hat eine Mehrzahl von festen Schwenkpositionen, in denen jeweils ein Teilbild oder Segment des Sehfeldes vom Teleskop erfaßt und auf der Detektorfläche der Bildabtastvorrichtung abgebildet wird. Die Antriebsvorrichtung überführt das Spiegelsystem in einer vorgegebenen Reihenfolge schrittweise in die diskreten Schwenkpositionen und setzt es dort jeweils für eine vorgegebene Zeitdauer still. Während des Stillstandes des Spiegelsystems wird dann das vom Teleskop entworfene Teilbild abgetastet.

Da für bidirektionale Bildabtastvorrichtungen oder unidirektionale Bildabtastvorrichtungen mit extrem kurzen Rückstellzeiten des Scanners keine ausreichenden Totzeiten vorhanden sind, die für die Spiegelschwenkung genutzt werden könnten, ist der Spiegelantrieb für das Schwenkspiegelsystem durch die Steuereinheit mit der Bildabtastvorrichtung derart synchronisiert, daß das Spiegelsystem jeweils mit Beginn jeder zweiten Abtastperiode seine jeweils nächste Schwenkposition eingenommen hat und diese während der eigentlichen Abtastphase (bei unidirektionalen Bildabtastvorrichtungen ist dies die Abtastperiode ohne Rückstellzeit) beibehält und während der folgenden Abtastperiode in seine nächste Position geschwenkt wird, also die jeweils erste Abtastperiode zur Spiegelschwenkung ausgenutzt wird. Entsprechend synchronisiert die Steuereinheit die Auswerteelektronik zur Verarbeitung der Abtastsignale und Darstellung der Abbildung des Sehfeldes auf dem Monitor mit der Bildverarbeitungsvorrichtung derart, daß nur die Abtastsignale aus jeder zweiten Abtastperiode zwecks Bildgenerierung zur Verarbeitung herangezogen werden. Dadurch wird zwar die bei Bildabtastvorrichtungen übliche Scanfrequenz von 50 Hz auf 25 Hz reduziert, doch beeinträchtigt dies nicht die Qualität der Bilddarstellung auf dem Monitor.

Da die Segmente innerhalb des Sehfeldes - wie dargelegt - aus optischen Gründen relativ klein sind, brauchen auch die Spiegelflächen des Spiegelsystems nur klein zu sein. Man kommt bei dem Spiegelsystem, das gemäß einer bevorzugten Ausführungsform der Erfindung zweckmäßigerweise aus zwei im optischen Strahlengang hintereinander liegenden, um orthogonale Schwenkachsen angetriebenen Spiegeln besteht, daher mit relativ kleinen Schwenkspiegeln aus, die masse- und damit trägheitsarm sind und schnell bewegt und wieder stillgesetzt werden können. Die Schnelligkeit der Spiegeleinstellung wird wesentlich dadurch vergößert, daß die beiden Spiegel schlagartig und ggf. gleichzeitig in eine fest vorgegebene Position überführt und dort auf Anschlag blockiert werden. Im Gegensatz zu einer kontinuierlichen Verstellung der Spiegel bis zur Endposition mit Stillsetzen des Antriebs in der Endposition, wird eine sehr viel kürzere Stellzeit zum Verbringen der Schwenkspiegel von der einen in die andere Position benötigt. Infolge der geringen Trägheitsmassen schwingen die Spiegel beim Anschlag in der neuen Position nur kurzzeitig und kommen schnell zur Ruhe. Bei der erfindungsgemäßen Ausblickbaugruppe können Umschaltzeiten für die Schwenkspiegel von kleiner 26 ms realisiert werden. Legt man die für bekannte Wärmebildgeräte übliche reine Abtastzeit pro Bild von 14 ms zugrunde, so werden für die Erfassung eines Segments des Sehfeldes weniger als 40 ms benötigt. Ein z.B. aus sechs Segmenten (zwei horizontal nebeneinanderliegende Reihen von jeweils drei vertikal übereinanderliegenden Segmenten) zusammengesetztes Sehfeld wird somit in weniger als 240 ms wiederholt abgetastet, d.h. auf den aktuellen Informationsstand gebracht. Je nach der gewünschten Auffrischrate des Sehfeldes kann dieses aus mehr oder weniger vielen Segmenten zusammengesetzt werden.

Vorteilhafte Ausführungsformen der erfindungsgemäßen Ausblickbaugruppe mit zweckmäßiger Weiterbildungen und Ausgestaltungen der Erfindung ergeben sich aus den weiteren Ansprüchen.

Gemäß einer bevorzugten Ausführungsform der Erfindung werden die während der Spiegelschwenkung entstehenden Quasitotzeiten für die Bildabtastvorrichtung dazu ausgenutzt, eine Bilddarstellung für einen zweiten optischen Sichtkanal zu generieren, um damit ein weiteres Sehfeld gleichzeitig auf dem gleichen oder einem separaten Monitor darzustellen. Hierzu wird ein zweites Teleskop und ein optisches Koppelglied verwendet, das während der Abtastperiode der Bildverarbeitungsvorrichtung, in welcher die Spiegelumstellung erfolgt, das vom zweiten Teleskop erzeugte Bild auf der Detektorfläche der Bildabtastvorrichtung zu dessen Abtastung abbildet. In aufeinanderfolgenden Abtastperioden der Bildabtastvorrichtung wird damit wechselweise ein vom ersten und zweiten Teleskop erzeugtes Bild abgetastet.

Wird gemäß einer weiteren Ausführungsform der Erfindung dem zweiten Teleskop ein Spiegelsystem in Strahleinfallsrichtung vorgeordnet, das zweckmäßigerweise ebenfalls aus zwei im Strahlengang hintereinander, um zueinander orthogonalen Achsen schwenkbaren Schwenkspiegeln besteht, so kann durch entsprechende Einstellung der Spiegel jede beliebige Position des Sehfelds im Raum eingestellt werden.

Zweckmäßigerweise sind gemäß einer weiteren Ausführungsform der Erfindung die beiden Strahlengänge oder optischen Kanäle der beiden Teleskope über einen Hauptspiegel geführt, so daß beide Teleskope in die gleiche Richtung blicken. In diesem Fall bildet das zweite Teleskop einen Sehfeldausschnitt innerhalb des mit dem ersten Teleskop auf dem Monitor abgebildeten Sehfeldes ab, der durch das vorgeordnete Spiegelsystem in jede Position innerhalb des Sehfeldes gelegt werden kann. Bei Anschluß der Antriebsmotoren für das zweite Spiegelsystem an eine Zielverfolgungseinrichtung folgt der Sehfeldausschnitt der Bewegung eines ausgewählten Ziels innerhalb des Sehfeldes.

Die Erfindung ist anhand eines in der Zeichnung dargestellten Ausführungsbeispiels im nachfolgenden näher beschrieben. Es zeigen:
- Fig. 1: ein Schaltbild der Funktionsblöcke einer opto-elektronischen Ausblickbaugruppe für ein Kampffahrzeug,
- Fig. 2: eine Seitenansicht des Optikteils der Ausblickbaugruppe in Fig. 1,
- Fig. 3: eine schematische Darstellung des Sehfelds der Ausblickbaugruppe,
- Fig. 4: ein Diagramm zur Erläuterung des Abtastvorgangs einer Bildabtastvorrichtung in der Ausblickbaugruppe in Fig. 1,
- Fig. 5: eine schematische Darstellung des Bildschirms eines Monitors mit der Ausblickbaugruppe in Fig. 1 mit zwei gleichzeitig dargestellten Sehfeldern.

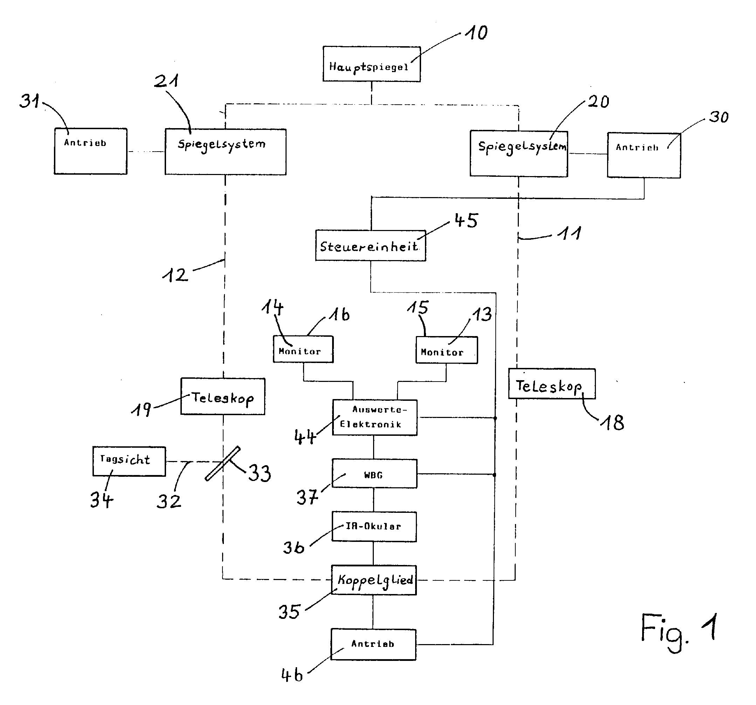

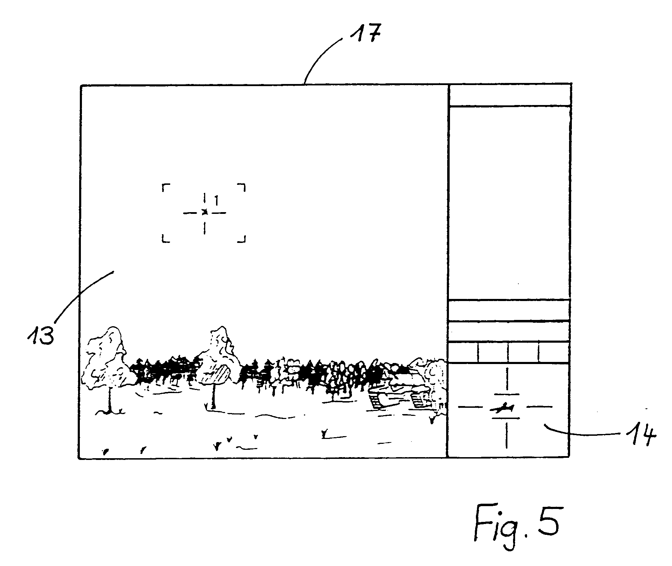

Die in Fig. 1 in Funktionsblöcken dargestellte opto-elektronische (optronische) Ausblickbaugruppe weist zwei optische Strahlengänge oder optische Kanäle 11, 12 auf, die in Fig. 1 strichliniert dargestellt sind. Eingangsseitig sind die beiden optischen Kanäle 11, 12 über einen Hauptspiegel 10, auch Ausblickspiegel genannt, zusammengeführt, so daß für beide optischen Kanäle 11, 12 die gleiche Blickrichtung besteht, die durch die Stellung des Hauptspiegels 10 vorgegeben ist. Der Hauptspiegel 10 ist kardanisch aufgehängt und mit Antriebsmotoren, Winkelsensoren, einem zweiachsig sensierenden Kreiselsystem und einer Stabilisierungs- und Antriebselektronik versehen. aber die beiden optischen Kanäle 11, 12 sind zwei getrennte Sehfelder 13, 14 auf getrennten Monitoren 15, 16 oder gemäß Fig. 5 auf einem gemeinsamen Monitor 17 darstellbar. Beide Sehfelder 13, 14 liegen innerhalb des Richtbereichs des stabilisierten Hauptspiegels 10.

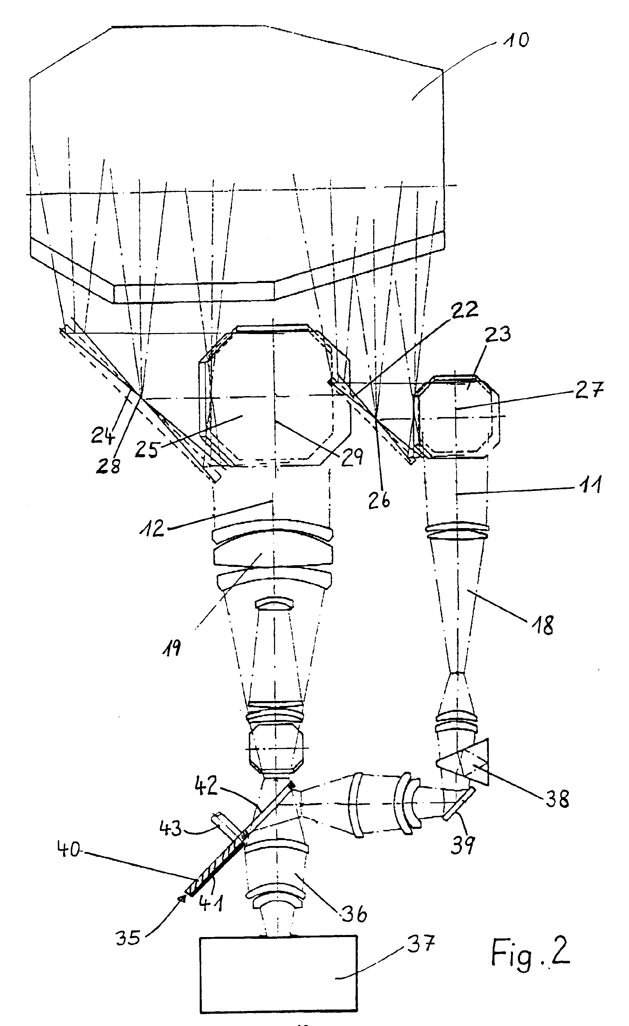

Im einzelnen weist jeder optische Kanal 11, 12 ein Objektiv oder Teleskop 18, 19 und ein dem Teleskop 18, 19 in Lichteinfallsrichtung vorgeordnetes Spiegelsystem 20, 21 auf. Jedes Spiegelsystem 20, 21 besteht aus zwei Schwenkspiegeln 22, 23 bzw. 24, 25 (Fig. 2), die im optischen Strahlengang hintereinander angeordnet und um orthogonale Schwenkachsen 26, 27 bzw. 28, 29 schwenkbar sind. Zum Antrieb der Schwenkspiegel 22, 23 bzw. 24, 25 ist jedem Spiegelsystem 20 bzw. 21 eine Antriebsvorrichtung 30 bzw. 31 zugeordnet, die zwei separate Stellmotoren für jeden Schwenkspiegel 22, 23 bzw. 24, 25 aufweist (hier nicht dargestellt). Das Teleskop 18 ist als IR-Objektiv ausgebildet, während das Teleskop 19 ein Breitbandobjektiv ist, da über dieses noch ein Tagsichtkanal 32 geführt ist, der mittels eines halbdurchlässigen Teilerspiegels 33 eine Tagsichtoptik 34 in den optischen Kanal 12 einkoppelt. Bei Wegfall des Tagsichtkanals 32 wird auch das Teleskop 19 als IR-Objektiv ausgebildet. Das Teleskop 18 hat eine kleine Vergrößerung mit einem großen Sehfeld, während das Teleskop 19 eine große Vergrößerung mit kleinem Sehfeld aufweist.

Beide optischen Kanäle 11, 12 sind durch ein optisches Koppelglied 35 und ein IR-Okular 36 auf ein Wärmebildgerät 37 geführt. Wie aus Fig. 2 ersichtlich, fluchtet die optische Achse des IR-Okulars 36 mit dem zweiten Teleskop 19, während der dazu parallele Strahlengang des ersten Teleskops 18 über eine Aufrichtoptik 38 und einen Umlenkpsiegel 39 etwa rechtwinklig zur optischen Achse des IR-Okulars 36 verläuft. Das optische Koppelglied 35 ist als kontinuierlich angetriebenes Chopperrad 40 ausgebildet, das eine in Drehrichtung über 180° sich erstreckende Spiegelfläche 41 und eine über die weiteren 180° sich erstreckende Strahlendurchgangsöffnung 42 aufweist. Die Drehachse 43 des Chopperrads ist unter einem spitzen Winkel zur optischen Achse des IR-Okulars 36 ausgerichtet und so angeordnet, daß während der Rotation des Chopperrads 40 die Spiegelfläche 41 und die Strahlendurchgangsöffnung 42 nacheinander durch den Strahlengang zwischen zweitem Teleskop 19 und Wärmebildgerät 37 hindurchtreten. Solange sich die Strahlendurchgangsöffnung 42 im Strahlengang befindet, wird das vom Teleskop 19 erzeugte Bild auf der hier nicht dargestellten Detektorfläche des Wärmebildgeräts 37 abgebildet. Tritt die Spiegelfläche 41 in den Strahlengang ein, so wird der Strahlengang zwischen zweitem Teleskop 19 und IR-Okular 36 unterbrochen und der Strahlengang des ersten Teleskops 18 zum IR-Okular 36 hin umgelenkt. Damit wird das vom ersten Teleskop 18 erzeugte, aufgerichtete Bild auf der Detektorfläche des Wärmebildgeräts 37 abgebildet. Während einer vollen Umdrehung des Chopperrads 40 gelangt damit jeweils einmal das vom ersten Teleskop 18 erzeugte Bild und einmal das vom zweiten Teleskop 19 erzeugte Bild zu dem Wärmebildgerät 37.

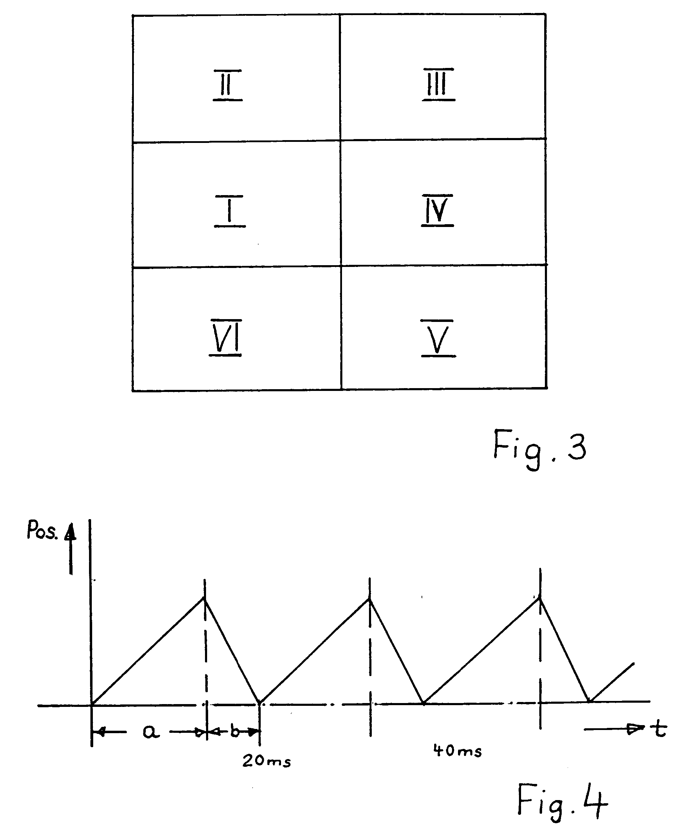

Das an sich bekannte Wärmebildgerät 37 weist eine IR-empfindliche Detektorfläche in Form einer Detektorzeile aus einer Vielzahl von Einzelelementen und einen sog. Scanner auf, der das jeweils von den Teleskopen 18, 19 erzeugte Bild horizontal über die Detektorzeile führt. Während dieses Scan- oder Abtastvorgangs wird jedes Einzelelement der Detektorzeile wiederholt ausgelesen und die erhaltenen elektrischen Signale, die sog. Abtastsignale, an eine Auswerteelektronik 44 gegeben. Der Scanner arbeitet unidirektional, d.h. er tastet das Bild immer in der gleichen Richtung ab und führt am Ende der Bildabtastung einen schnellen Rücklauf aus. Die Position des Scanners bezüglich des abzutastenden Bildes in Abhängigkeit von der Zeit ist idealisiert in Fig. 4 dargestellt. Bei einer Scanfrequenz von 50 Hz erfolgt zunächst die Abtastung des Bildes während einer Zeitdauer von 14 ms (Abtastphase a), wonach in weiteren 6 ms der Rücklauf des Scanners auf seiner Ausgangsposition durchgeführt wird (Rücklaufphase b), von wo aus die nächste Abtastperiode mit Abtastphase a und Rücklaufphase b von insgesamt 20 ms beginnt. In der Auswerteelektronik 44 werden die einzelnen Abtastsignale gespeichert und zur Bilddarstellung auf den Monitoren 15, 16 in an sich bekannter Weise verarbeitet. Die Darstellung auf den Monitoren 15, 16 erfolgt in Standard-Fernsehnorm.

Die Antriebsvorrichtung 31 für das Spiegelsystem 21 ist so ausgebildet, daß ein stetiges Schwenken der beiden Schwenkspiegel 24, 25 erfolgt, so daß das Sehfeld des Teleskops 19 innerhalb des Richtbereichs des Hauptspiegels 10 kontinuierlich bewegt werden kann. Wird die Antriebsvorrichtung 31 z.B. an eine Zielverfolgungseinrichtung angeschlossen, so folgt das Sehfeld des Teleskops 19 der Bewegung eines ausgewählten Ziels, das infolge der Vergrößerung des Teleskops 19 in einer Art Lupendarstellung 14 (Fig. 5) auf dem Monitor 16 (Fig. 1) bzw. 17 (Fig. 5) dargestellt wird.

Die Antriebsvorrichtung 30 für das Spiegelsystem 20 ist hingegen so ausgebildet, daß die beiden Schwenkspiegel 22, 23 auf Anschlag in definierte Schwenkpositionen überführt werden. In jeder Schwenkposition der beiden Schwenkspiegel 22, 23 weist die Strahleinfallsrichtung für das Spiegelsystem 20 einen fest vorgegebenen Auslenkwinkel bezüglich der optischen Achse des Teleskops 18 auf, so daß das Sehfeld des Teleskops 18 um definierte Schritte im Raum vertikal und horizontal verschoben wird. Eine Steuereinheit 45 steuert die Antriebsvorrichtung 30 derart, daß das Spiegelsystem 20 nacheinander und in vorgegebener Reihenfolge seine einzelnen Schwenkpositionen einnimmt und für eine vorbestimmte Zeitdauer in der jeweils eingenommenen Schwenkposition verbleibt. Die Schwenkpositionen des Spiegelsystems 20 sind mittels eines Rasters fest vorgegeben und können reproduzierbar von der Antriebsvorrichtung 30 angefahren werden. Die Verschiebung des Sehfeldes des Teleskops 18 in den verschiedenen Schwenkpositionen des Spiegelsystems 20 ist in Fig. 3 schematisch dargestellt. Mit I ist dabei die Lage des in der ersten Schwenkposition des Spiegelsystems 20 erhaltenen Sehfeldes des Teleskops 18 gekennzeichnet, mit II die zweite usw.. Beginnend mit der ersten Einstellposition wird schrittweise ein Schwenkspiegel 22, 23 des Spiegelsystems 20 um seine Achse definiert gekippt, und zwar von Position I zu Position II der Vertikalspiegel 22, von Position II zu Position III der Horizontalspiegel 23, von Position III zu Position IV und von Position IV zu Position V ebenfalls der Vertikalspiegel 22, von Position V zu Position VI wiederum der Horizontalspiegel 23 und von Position VI in Position I wiederum der Vertikalspiegel 22.

Die Steuereinheit 45 synchronisiert nunmehr die Antriebsvorrichtung 30 für das Spiegelsystem 20 sowie eine Antriebsvorrichtung 46 für das Chopperrad 40 und die Auswerteelektronik 44 jeweils mit dem Wärmebildgerät 36. Dabei wird die Antriebsvorrichtung 30 derart synchronisiert, daß das Spiegelsystem 20 mit Beginn jeder zweiten Abtastperiode des Scanners des Wärmebildgeräts 35, also alle 40 ms in Fig. 4, die nächste Schwenkposition eingenommen hat und mindestens während der Abtastzeit von 14 ms in dieser Schwenkposition verbleibt. Die Antriebsvorrichtung 46 des Chopperrads 40 ist derart synchronisiert, daß das Chopperrad 40 während zweier aufeinanderfolgender Abtastperioden eine volle Umdrehung ausführt, so daß während aufeinanderfolgender Abtastperioden einmal der optische Kanal 11 und einmal der optische Kanal 12 für das Wärmebildgerät 36 sichtbar wird. Die Auswerteelektronik 44 ist derart synchronisiert, daß die in aufeinanderfolgenden Abtastperioden abgenommenen Abtastsignale jeweils in getrennten Speichern abgelegt und zu zwei separaten Bildern verarbeitet werden.

Wie in Fig. 5 zu sehen ist, erscheint auf dem Monitor 17 ein großes Sehfeld 13 aus dem Überwachungsgebiet mit einer Auflösung, die allein mit dem Teleskop 18 nur mit Einschränkung auf ein kleines Sehfeld mit der Fläche eines in Fig. 3 zu sehenden Segments I-VI erreichbar wäre. Anders augedrückt wird auf dem Monitor 17 ein sechsmal so großes Sehfeld abgebildet, wie es das Teleskop 18 bei der gewünschten Auflösung liefert. Da das vom Teleskop 18 generierte Bild in jeder zweiten Abtastperiode abgetastet wird, sind für die vollständige Darstellung des Sehfeldes 13 zwölf Abtastperioden des Scanners erforderlich, was bei einer Abtastfrequenz von 50 Hz eine Auffrischrate des Sehfeldes von 240 ms entspricht. Parallel dazu kann das zweite Sehfeld 14 kontinuierlich mit einer frei wählbaren Ausschnittsvergrößerung aus dem Sehfeld das optische Kanals 12 dargestellt werden.

Die Erfindung ist nicht auf das beschriebene Ausführungsbeispiel beschränkt. So kann beispielsweise anstelle eines Wärmebildgerätes eine CCD-Kamera oder eine andere elektronische Bildabtastvorrichtung verwendet werden. Auch lassen sich mehr als zwei optische Kanäle in der beschriebenen Weise mit einer einzigen Bildabtastvorrichtung zur Darstellung separater Bilder heranziehen.

## Patentansprüche

1. Opto-elektronische Ausblickbaugruppe zur Abbildung eines Sehfelds (13) auf einem Monitor (15), insbesondere für militärische Kampffahrzeuge, mit einem ersten Teleskop (18) zur Erzeugung eines optischen Teilbildes des Sehfeldes, mit einer Bildabtastvorrichtung, wie Wärmebildgerät (37) oder CCD-Kamera, zur wiederholten elektronischen Abtastung der Teleskopabbildung unter Erzeugung von Abtastsignalen, mit einer elektronischen Auswerteeinheit (44) zur Verarbeitung der Abtastsignale und Darstellung der Teleskopabbildung auf dem Monitor (15), mit einem dem ersten Teleskop (18) im optischen Strahlengang (11) in Strahleinfallsrichtung vorgeordneten Spiegelsystem (20) mit einer Antriebsvorrichtung (30) zur reproduzierbaren Schwenkung des Spiegelsystems (20) in Vertikal- und Horizontalrichtung und mit einer Steuereinheit (45), dadurch gekennzeichnet, daß die Steuereinheit (45) derart ausgebildet ist, daß sie vermittels der Antriebsvorrichtung (30) das Spiegelsystem (20) in vorgegebenener Reihenfolge schrittweise in fest vorgegebene diskrete Schwenkpositionen überführt und dort jeweils für eine vorgegebene Zeitdauer stillsetzt und daß die Steuereinheit (45) einerseits die Antriebsvorrichtung (30) für das Spiegelsystem (20) mit der Bildabtastvorrichtung (37) derart synchronisiert, daß das Spiegelsystem (20) mit Beginn jeder zweiten Abtastperiode die nächste Schwenkposition eingenommen hat und während mindestens der Abtastperiode in dieser verbleibt, und andererseits die Auswerteeinheit (44) mit der Bildabtastvorrichtung (37) derart synchronisiert, daß jeweils nur die Abtastsignale jeder zweiten Abtastperiode, in welcher das Spiegelsystem (20) in seiner vorgegebenen Schwenkposition steht, zur Bilddarstellung herangezogen werden.

2. Ausblickbaugruppe nach Anspruch 1, dadurch gekennzeichnet, daß ein zweites Teleskop (19) zur Erzeugung eines optischen Bildes eines zweiten Sehfelds (14) vorgesehen ist, daß im optischen Strahlengang (11) zwischen erstem Teleskop (18) und Bildabtastvorrichtung (37) ein optisches Koppelglied (35) angeordnet ist, das wechselweise die von dem ersten und zweiten Teleskop (18, 19) erzeugten optischen Bilder auf der Bildabtastvorrichtung (37) zu deren Abtastung abbildet, und daß die Steuereinheit (45) einerseits das Koppelglied (35) mit der Bildabtastvorrichtung (37) derart synchronisiert, daß in aufeinanderfolgenden Abtastperioden die Bilder wechselweise jeweils vollständig abgetastet werden, und andererseits die Auswerteeinheit (44) derart mit der Bildabtastvorrichtung (37) synchronisiert, daß in aufeinanderfolgenden Abtastperioden erhaltene Abtastsignale getrennt zur Bilddarstellung verarbeitet werden.

3. Ausblickbaugruppe nach Anspruch 2, dadurch gekennzeichnet, daß die optische Koppelvorrichtung (35) als kontinuierlich angetriebenes Chopperrad (40) mit einem Antrieb (46) ausgebildet ist, das eine in Drehrichtung über 180° sich erstreckende Spiegelfläche (41) und eine über weitere 180° sich erstreckende Strahlendurchgangsöffnung (42) aufweist, daß das Chopperrad (40) mit unter spitzem Winkel zum Strahlengang zwischen dem zweiten Teleskop (19) und der Bildabtastvorrichtung (37) ausgerichteten Drehachse (43) so angeordnet ist, daß Spiegelfläche (41) und Strahlendurchgangsöffnung (42) nacheinander durch diesen Strahlengang hindurchtreten, daß der am ersten Teleskop (18) austretende Strahlengang über optische Umlenkelemente so geführt ist, daß er von der Spiegelfläche (41) des Chopperrads (40) auf die Bildabtastvorrichtung (37) umlenkbar ist, und daß die Steuereinheit (45) den Antrieb (46) für das Chopperrad (40) mit der Bildabtastvorrichtung (37) derart synchronisiert, daß das Chopperrad (40) während zweier aufeinanderfolgender Abtastperioden eine volle Umdrehung ausführt.

4. Ausblickbaugruppe nach Anspruch 2 oder 3, dadurch gekennzeichnet, daß dem zweiten Teleskop (19) im optischen Strahlengang (12) ein zweites Spiegelsystem (21) zur Schwenkung der Strahleinfallsrichtung in Vertikal- und Horizontalrichtung in Strahleinfallsrichtung vorgeordnet ist und daß dem Spiegelsystem (21) eine zweite Antriebsvorrichtung (31) zum kontinuierlichen Schwenken des Spiegelsystems (21) zugeordnet ist.

5. Ausblickbaugruppe nach einem der Ansprüche 2 bis 4, dadurch gekennzeichnet, daß die Strahlengänge (11, 12) für die beiden Teleskope (18, 19) mit jeweils in Lichteintrittsrichtung vorgeordnetem Spiegelsystem (20, 21) über einen gemeinsamen Hauptspiegel (10) geführt sind, der vorzugsweise raumstabilisiert ist.

6. Ausblickbaugruppe nach einem der Ansprüche 1 bis 5, dadurch gekennzeichnet, daß jedes Spiegelsystem (20, 21) einen um eine Horizontalachse (26, 28) schwenkbaren Vertikalspiegel (23, 25) und einen um eine Vertikalachse (27, 29) schwenkbaren Horizontalspiegel (23, 25) aufweist und daß jeweils die beiden Spiegel (22, 23 bzw. 24, 25) im optischen Strahlengang (11 bzw. 12) hintereinander angeordnet und jeweils von einem separaten Stellmotor angetrieben sind.

## Claims

1. Optoelectronic viewing assembly for imaging a visual field (13) on a monitor (15), in particular for military combat vehicles, with a first telescope (18) for generating an optical partial image of the visual field, with an image scanner such as a thermal image device (37) or CCD camera for repeated electronic scanning of the telescope image to generate scanning signals, with an electronic evaluation unit (44) for processing the scanning signals and displaying the telescope image on the monitor (15), with a mirror system (20) arranged in the optical path (11) in front of the first telescope (18) in the direction of ray incidence with a drive means (30) to reproducibly swivel the mirror system (20) in vertical and horizontal direction and with a control unit (45), characterised in that the control unit (45) is constructed so that by means of a the drive means (30), it shifts the mirror system (20) step-by-step into fixed predetermined discrete swivel positions in a predetermined sequence and stops it there for a respective predetermined period of time, and that the control unit (45), on the one hand, synchronises the drive means (30) for the mirror system (20) with the image scanner (37) in such a way that, by the beginning of each second scanning period, the mirror system (20) has assumed the next swivel position and remains therein at least during the scanning period, and, on the other hand, synchronises the evaluation unit (44) with the image scanner (37) in such a way that only the respective scanning signals for each second scanning period, in which the mirror system (20) stands in its predetermined swivel position, are used for image display.

2. Viewing assembly according to Claim 1, characterised in that a second telescope (19) is provided for generation of an optical image for a second visual field (14); that in the optical path (11) between the first telescope (18) and the image scanner (37), an optical interface (35) is disposed, which alternately images the optical images generated by the first and second telescope (18, 19) on the image scanner to scan them; and that the control unit (45), on the one hand, synchronises the interface (35) with the image scanner (37) in such a way that the images are each alternately fully scanned in consecutive scanning periods, and on the other hand, synchronises the evaluation unit (44) with the image scanner (37) in such a way that scanning signals received in consecutive scanning periods are processed separately from the image display.

3. Viewing assembly according to Claim 2, characterised in that the optical interface (35) is constructed as a continuously driven chopper wheel (40) with a drive (46), which has a mirror surface (41) extending over 180° in the direction of rotation and a port (42) extending over a further 180°; that the chopper wheel (40) with a rotational axis (43) aligned at an acute angle to the optical path between the second telescope (19) and the image scanner (37) is arranged in such a way that the mirror surface (41) and the port (42) pass through this optical path one behind the other; that the optical path exiting at the first telescope (18) is guided via optical deflection elements in such a way that it can be deflected from the mirror surface (41) of the chopper wheel (40) onto the image scanner (37); and that the control unit (45) synchronises the drive (46) for the chopper wheel (40) with the image scanner (37) in such a way that the chopper wheel (40) makes a full rotation during two consecutive scanning periods.

4. Viewing assembly according to Claim 2 or 3, characterised in that a second mirror system (21) is disposed in the optical path (12) in front of the second telescope (19) to swivel the direction of ray incidence in vertical and horizontal direction;and that a second drive means (31) is allocated to the mirror system (21) to continuously swivel the mirror system (21).

5. Viewing assembly according to one of Claims 2 to 4, characterised in that the optical paths (11, 12) for the two telescopes (18, 19) with the respective mirror system (20, 21) disposed in front of them in the direction of light incidence are guided via a common main mirror (10), which is preferably spatially stabilised.

6. Viewing assembly according to one of Claims 1 to 5, characterised in that each mirror system (20, 21) has a vertical mirror (22, 24), which may be swivelled around a horizontal axis (26, 28), and a horizontal mirror (23, 25), which may be swivelled around a vertical axis (27, 29); and that the two respective mirrors (22, 23 or 24, 25) are disposed one behind the other in the optical path (11 or 12) and are each driven by a separate control motor.

## Revendications

1. Module de visualisation optoélectronique pour la formation d'un champ d'observation (13) sur un moniteur (15), notamment pour des véhicules militaires de combat, comportant une première lunette (18) servant à produire une image optique partielle du champ d'observation, un dispositif de balayage d'images, **tel qu'un** appareil (35) d'enregistrement d'images thermiques ou une caméra CCD, pour un balayage électronique répété de l'image produite par la lunette tout en formant des signaux de balayage, une unité d'évaluation électronique (44) pour le traitement des signaux de balayage et la représentation de l'image de la lunette sur le moniteur (15), un système de miroirs (20) disposé en amont de la première lunette (18) sur le trajet du rayonnement optique (11), dans la direction d'incidence du rayonnement, et équipé d'un dispositif d'entraînement (30) pour réaliser le basculement reproductible du système de miroirs (20) dans une direction verticale et une direction horizontale, et une unité de commande (45), caractérisée en ce que l'unité de commande (45) est agencée de telle sorte qu'à l'aide du dispositif d'entraînement (30), elle fait passer le système de miroirs (20) pas-à-pas, selon une séquence prédéterminée, par des positions de basculement discrètes prédéterminées de façon fixe et arrête le système de miroirs dans ces positions respectivement pendant une durée prédéterminée, et que l'unité de commande (45) synchronise d'une part le dispositif d'entraînement (30) pour le système de miroirs (20) sur le dispositif de balayage d'images (37) de telle sorte que le système de miroirs (20) prend, au début de chaque seconde période de balayage, la position de basculement immédiatement suivante et reste dans cette position pendant au moins la période de balayage, et synchronise d'autre part l'unité d'évaluation (44) sur le dispositif de balayage d'images (37) de telle sorte que respectivement seuls les signaux de balayage de chaque seconde période de balayage, pendant laquelle le système de miroirs (20) est dans sa position de basculement prédéterminée, sont utilisés pour la représentation de l'image.

2. Module d'observation suivant la revendication 1, caractérisé par le fait qu'une seconde lunette (19) est prévue pour la production d'une image optique d'un second champ d'observation (14), que dans le trajet du rayonnement optique (11) entre la première lunette (18) et le dispositif de balayage d'images (37) est disposé un élément de couplage optique (35), qui alternativement reproduit les images optiques, produites par les première et seconde lunettes (18,19), sur le dispositif de balayage d'images (37), pour leur balayage et que l'unité de commande (45) synchronise d'une part l'élément de couplage (35) sur le dispositif de balayage d'images (37) de telle sorte que les images sont balayées alternativement respectivement d'une manière complète pendant des périodes successives de balayage, et synchronise d'autre part l'unité d'évaluation (44) sur le dispositif de balayage d'images (37) de telle sorte que les signaux de balayage, obtenus pendant des périodes de balayage successives, sont traités séparément pour la représentation de l'image.

3. Module d'observation suivant la revendication 2, caractérisé en ce que le dispositif de couplage optique (35) est agencé sous la forme d'une roue stroboscopique (40) entraînée continûment et équipée d'un dispositif d'entraînement (46) et qui possède une surface réfléchissante (41), qui s'étend sur 180° dans le sens de rotation, et une ouverture (42) du passage du rayonnement, qui s'étend sur 180° supplémentaires, que la roue stroboscopique (40) est disposée en faisant un angle aigu par rapport au trajet du rayonnement qui s'étend entre la seconde lunette (19) et le dispositif de balayage d'images (37), de sorte que la surface (41) du miroir et l'ouverture (42) de passage du rayonnement traversent successivement ce trajet du rayonnement, que le trajet du rayonnement, qui sort au niveau de la première lunette (18), est guidé par des éléments optiques de renvoi de telle sorte qu'il peut être dévié, par la surface réfléchissante (41) de la roue stroboscopique (40), sur le dispositif de balayage d'images (37) et que l'unité de commande (45) synchronise le dispositif d'entraînement (46) pour la roue stroboscopique (40) sur le dispositif de balayage d'images (37) de telle sorte que la roue stroboscopique (40) exécute une rotation complète pendant deux périodes d'échantillonnage successives.

4. Module d'observation suivant la revendication 2 ou 3, caractérisé en ce qu'en amont de la seconde lunette (19), dans la direction d'incidence du rayonnement, dans le trajet du rayonnement optique (12) est disposé un second système de miroirs (21) servant à faire basculer la direction d'incidence du rayonnement dans une direction verticale et une direction horizontale et qu'un second dispositif d'entraînement (31) servant à réaliser le basculement continu du système de miroirs (21) est associé à ce système de miroirs.

5. Module d'observation suivant l'une des revendications 2 à 4, caractérisé en ce que les trajets de rayonnement (11,12) pour les deux lunettes (18,19) sont guidés à l'aide d'un système de miroirs (20,21) disposé respectivement en amont dans la direction d'incidence de la lumière, par l'intermédiaire d'un miroir principal commun (10), qui est de préférence stabilisé dans l'espace.

6. Module d'observation suivant l'une des revendications 1 à 5, caractérisé en ce que chaque système de miroirs (20,21) possède un miroir vertical (22,24) qui peut basculer autour d'un axe horizontal (26,28), et un miroir horizontal (23,25) qui peut basculer autour d'un axe vertical (27,29) et que respectivement les deux miroirs (22, 23 ou 24, 25) sont disposés l'un derrière l'autre dans le trajet du rayonnement optique (11 ou 12) et sont entraînés par des servomoteurs séparés.
